# EUROPEAN PATENT APPLICATION

(11) **EP 2 426 046 A1**
(43) Date of publication of application: **07.03.2012**
(21) Application number: 10425287.9
(22) Date of filing: 03.09.2010
(51) Int. Cl.: B63B 35/79, A45F 3/14

(54) **Sports equipment adapted to counteract localised forces**

(71) Applicant: Advance kites S.R.L., 25057 Sale Marasino (Bresia) (IT)
(72) Inventor: Mazzucchelli, Alessandro, 25057 Sale Marasino (Brescia) (IT); Janssen, Erwin, 25057 Sale Marasino (Brescia) (IT)
(74) Representative: Lunati, Valerio

(57) **Abstract**

It is disclosed a sports equipment (1) adapted to provide support and protection for at least one body portion (10) during performance of a physical activity and comprising at least one bladder (2) adapted to define an inner volume (2a); a plurality of distinct particles (3) disposed within the inner volume (2a); and at least one valve (5) suitable to create, upon command, a connection for fluid passage between the inner volume (2a) and the environment outside the sports equipment (1) thus varying the inner volume (2a) so as to define an expanded configuration, in which the distinct particles (3) are freely movable in the bladder (2), and a compressed configuration in which the distinct particles (3) become compacted defining the resistant element (3a).

## Description

The present invention relates to a sports equipment adapted to counteract localised forces of the type pointed out in the preamble of the first claim.

In particular, it is adapted to counteract excessive and localised forces typical of a sport activity to inhibit said forces from being discharged on a body portion giving rise to traumas, muscle problems or other similar complications.

This sports equipment is therefore suitable for use in sport activities such as kitesurfing, paragliding, hang gliding, which are characterised by heavy tensions discharged on the user. In addition said sports equipment can be used for camping rucksacks and similar equipment.

It is known that when practising a sport activity it is of the greatest importance to have an appropriate equipment capable of absorbing at least part of the stresses that would otherwise lie heavy on the user, without on the other hand constituting a hindrance to the user's movements.

One of the most important examples of sport activities in which, for the above reasons, an appropriate equipment is of primary importance is kitesurfing. Kitesurfing is a water sport contemplating use of a board for riding the waves and of a kite. In this sport the user controls the kite and therefore motion by a control bar connected to the kite by a plurality of tie-rods.

As can be easily understood, in kitesurfing the wind through the kite can give origin to great forces that are fully absorbed by the user's body. For this reason, use of an appropriate sports equipment referred to as "trapeze" is of the greatest importance, which trapeze supports the user during the activity and absorbs forces and tensions. In fact, the trapeze is provided to be linked to a cable directly connected to the control bar.

This support equipment consists of at least one band passing around the user's back and serving to discharge part of the kite's tractive force acting on the back through said cable. In addition, this sports equipment is adapted to absorb shocks in case of possible fall.

The necessity to have an appropriate sports equipment is also very important in other sport activities such as hang gliding and paragliding.

In hang glider flight this equipment consists of a structure, referred to as "harness", directly connected to the hang glider and surrounding the shoulders and almost the whole bust of the user, enabling him/her to keep a lying or stretched position. Due to structure and shape, also a safe hooking to the hang glider is allowed, so that execution of manoeuvring operations is facilitated and during long flights a comfortable position is ensured with absorption of most of the stresses.

In paraglider flight, the user is lodged in a sitting position within a suitable equipment referred to as "lumbar support" adapted to keep the user seated and to which, through a plurality of cables, a wing is hooked.

Another case in which an appropriate equipment is absolutely necessary is camping or other similar activities in the open air, where a rucksack for carrying heavy loads is used, which therefore exerts considerable forces on the user. In this particular equipment it is of the greatest importance to have a suitably shaped and fitted back enabling a correct weight discharge to be achieved. The different types of sports equipment presently used in the above described sport activities substantially have the same structure. In detail, said equipment consists of an inner structure adapted to perform almost all the above described functions of taking up stresses, while at the same time ensuring an appropriate comfort, and of an outer cover wrapping the inner structure to avoid deterioration of same.

The outer cover is usually made of a polyamide material or other similar material capable of withstanding both possible impacts and corrosion by external agents, such as seawater.

The inner structure represents the most important part of the harness and determines most of the stress-absorbing capabilities, i.e. the quality of the sports equipment. In particular, the choice of the materials forming the inner structure is very important as they must ensure an almost perfect adhesion of the equipment to the body under any use condition.

The materials used must therefore be soft so as to offer a good deformability and therefore ensure good adhesion to the body. At the same time, they must be sufficiently strong and hard to counteract the external forces. Therefore these materials can vary based on the user's specific requirements and can consist of foam rubber, polychloroprene-based synthetic rubber, open- or closed-cell foam, polyvinyl chloride, also known as PVC.

The above mentioned known art has some important drawbacks.

In fact, the different types of sport equipment presently used have non-optimal features, i.e. they are not able to ensure high security and comfort. This problem above all concerns the inner structure that must simultaneously meet deformability and hardness requirements, which requirements are substantially opposite.

In practice, the materials presently used do not represent an ideal choice, but only a compromise between the necessity to have an appropriate security degree (stiffness) combined with comfort and practical use of the sports equipment (deformability).

The user, when buying sports equipment, is therefore obliged to choose between one of the two above mentioned aspects, so that the other is inevitably penalised.

In conclusion, there are types of sports equipment characterised by a good adhesion to the wrapped body portion, but a very limited capability of counteracting external forces and stresses. Alternatively, there are types of sports equipment that are stiff, i.e. with a great capability of withstanding stresses, which however have a reduced adaptability to the user's body. In particular, a non-perfect adhesion between the sports equipment and the user's body gives rise to regions submitted to high stresses and therefore particularly prone to arising of injuries such as backache and sprains.

Finally, in case of intermediate solutions, i.e. when materials are chosen that are a compromise between the above qualities, the sports equipment is able to only face small stresses and therefore an optimal solution to these problems is not reached.

Another problem is represented by the high thickness of the equipment in question that, above all in case of a stiff internal structure, penalises the sensation of comfort and the practical use of the equipment itself. In fact, the big sizes limit freedom of movement making it difficult to perform the physical activity.

Finally, another important problem typical of the presently used sports equipment resides in the high weight making it of reduced practical use.

Under this situation, the technical task underlying the present invention is to conceive a sports equipment capable of substantially obviating the mentioned drawbacks.

Within the scope of this technical task, it is an important aim of the invention to obtain a sports equipment characterised by a high counteraction capability under any use condition.

Another aim of the invention is to conceive a sports equipment perfectly adhering to the wrapped body portion.

A further important aim of the invention is to conceive a lightweight sports equipment enabling the user to freely move.

Another aim of great importance too is to conceive a sports equipment adapted to give a high sensation of comfort.

The technical task mentioned and the aims specified are achieved by a sports equipment adapted to counteract localised forces, as claimed in the Claim 1. Preferred embodiments are highlighted in the sub-claims.

The features and advantages of the invention are hereinafter clarified by the detailed description of a preferred embodiment of the invention, with reference to the accompanying drawings, in which:
**Fig. 1** is a view of the sports equipment of the invention in an open position;
**Fig. 2** is a view of the sports equipment when worn;
**Fig. 3a** shows a section of a first step of use of the sports equipment seen in Fig. 2;
**Fig. 3b** shows the section seen in Fig. 3a in a second step of use of the sports equipment; and
**Fig. 3c** shows the section seen in Fig. 3b in a third step of use of the sports equipment.

With reference to the drawings, the sports equipment according to the invention is generally identified by reference numeral **1**.

It is suitable for application to at least one body portion **10** to counteract a too heavy outer stress thereon giving rise to traumas, muscle problems or other similar complications. This equipment 1 is therefore adapted to be used in sport activities in which there are great forces that are discharged on the user. For instance, it can form a camping rucksack or other similar equipment and, more specifically, the rucksack portion coming into contact with the user's body, i.e. the rucksack back and/or bands.

Preferably, the sports equipment 1 constitutes an equipment usable for increasing security in performing a physical/sport activity such as kitesurfing, paragliding, hang gliding. For instance, it can therefore form a trapeze for kitesurfing, a harness for a hang glider or a lumbar support for a paraglider. In particular, the sports equipment 1 constitutes a trapeze for kitesurfing.

Briefly, it comprises at least one bladder **2** designed to define an inner volume **2a** in which a plurality of distinct particles **3** is disposed, and an outer cover **4** suitable to enable connection of the equipment to the user and to define at least one housing inside which at least one of said bladders 2 is fully disposed. In particular, a seat containing a single bladder 2 which, as pointed out in the following, is preferably integral with the profile of said seat so that bladder 2 is always correctly disposed inside the housing itself.

Bladder 2 is made of a polymeric material or other suitable material and conveniently sealed, for example by means of glues, so that said inner volume 2a is hermetically closed, i.e. does not allow and undesirable escape of air and/or distinct particles 2 from the inside.

It is advantageously provided with at least one valve 5 or other similar device adapted to enable a connection for fluid passage to be created, upon command, between the inner volume 2a and the environment outside the sports equipment 1. In particular, the connection created by said valve 5 is adapted to allow gas passage and, more particularly, air passage.

The expression "upon command" means that valve 5 allows the connection for fluid passage to be opened or closed exclusively based on a command given by the user. For instance, valve 5 is of the type usable in inflatable mattresses or life belts, i.e. consisting of a duct suitable to make the connection and a plug that is manually removed or brought into engagement with the duct by opening or closing said connection.

Valve 5 therefore enables the inner volume 2a of bladder 2 to be varied upon command, thus defining an expanded configuration and a compressed configuration of the sports equipment 1.

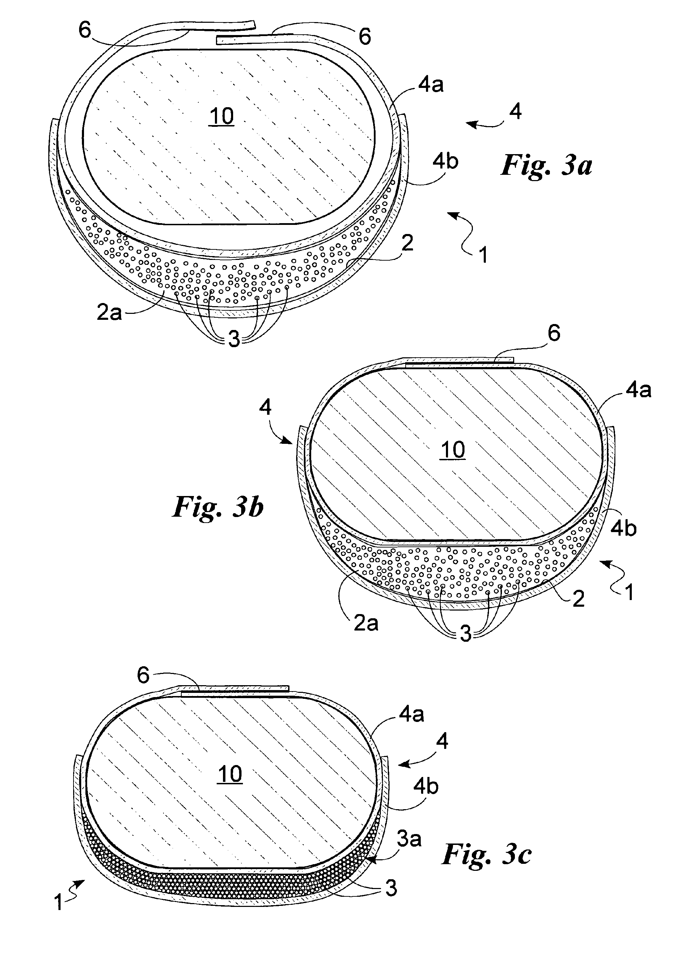

In the expanded configuration represented in Fig. 3b, bladder 2 takes its maximum sizes and in the inner volume 2a there are the distinct particles and air. In conclusion, in said expanded configuration particles 3 are freely movable within bladder 2.

On the contrary, in the compressed configuration, shown in Fig. 3c, bladder 2 takes its minimum sizes. The air content in the inner volume 2a is substantially negligible and therefore in bladder 2 the are substantially only the distinct particles 3. This situation, as better described in the following, causes the distinct particles to become compacted defining a resistant element **3a**, i.e. a substantially stiff body adapted to protect and support the user while performing the physical activity.

In detail, the resistant element 3a is made up of a thin layer of distinct particles 3 which preferably has a thickness substantially included between 1 cm and 1 dm and, more specifically, between 2 cm and 6 cm.

Passage from the configuration shown in Fig. 3b to that shown in Fig. 3c takes place by removing air from bladder 2, which bladder contracts and collapses upon itself. This action brings particles 3 in contact with each other and, more specifically, causes bladder 2 that collapses upon itself, to press the distinct particles 3 against each other so that they become mutually integral forming the resistant element 3a. To this aim the material constituting particles 3 is a material adapted to enable said particles to adhere to each other when compressed. In detail, this material is preferably a polymer and, more specifically, a thermoplastic polymer.

In order to have a sufficiently thick resistant element 3a, and therefore adapted to face stresses and shocks, the distinct particles 3 take up a portion of the inner volume 2a, calculated when the sports equipment is in the expanded configuration, substantially included between 3% and 50% of the inner volume 2a. More particularly, this portion is almost included between 10% and 30% of the inner volume 2a.

In addition, to ensure a correct formation of the resistant element 3a, bladder 2 is such sized that, during use of the sports equipment 1, it suitably wraps an appropriate part of the body portion 10 to be protected.

In detail, bladder 2 is such shaped that, during passage from the expanded to the compressed configuration, the distinct particles 3 press against said body portion 10 and, therefore, the resistant element 3a adheres to said portion substantially in a perfect manner.

For instance, if the equipment 1 constitutes a trapeze for kitesurfing, bladder 2 wraps the back and at least part of the hips, as shown in Fig. 3b. In case of a harness for a hang glider, it covers the front part of the bust and at least part of the shoulders and hips, while, if the sports equipment 1 constitutes a lumbar support of the paraglider, bladder 2 substantially wraps the whole lower backside.

In order to avoid an incorrect positioning of bladder 2 and therefore an inadequate covering of the concerned body portion 10, said bladder is fastened to the profile of the housing defined by the outer cover 4. This connection is made by means of seams, Velcro, glues or other similar solution adapted to ensure locking between bladder 2 and the profile of the housing under any use condition.

The outer cover 4 comprises a bearing coating **4a** and a protection coating **4b** linked to each other by means of seams for example, so as to jointly define at least one housing for at least one bladder 2. In detail, the two coatings 4a and 4b define a single housing.

The bearing coating 4a is placed in that part of the sports equipment 1 directly in contact with the body portion 10 to be protected. It is therefore made of a fabric material or other similar material adapted to define a comfortable support surface. In particular, in order to make use of the sports equipment 1 comfortable, the bearing coating 4a can have an appropriate wadding of foam rubber or other similar material.

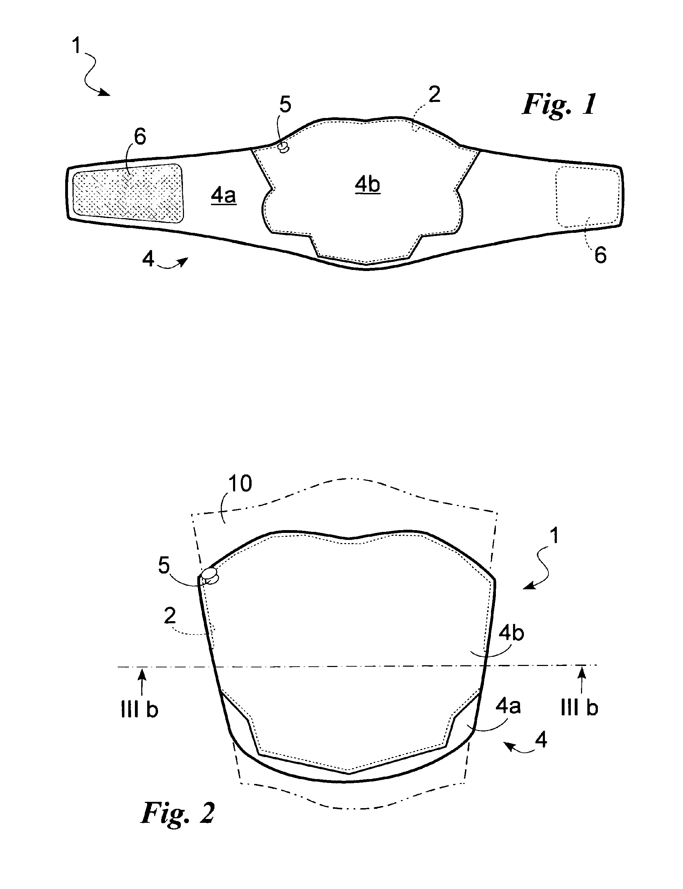

The protection coating 4b is adapted to define at least part of the outer surface of the sports equipment when it is worn by the user. In detail, the protection coating 4b defines a substantially stiff surface suitable to absorb possible falls and impacts. It is therefore made of a polymeric material, in particular closed-cell EVA foam, or other similar material adapted to perform the above function. The sports equipment 1, in addition to the above mentioned components, comprises tying means **6** suitable to steadily fasten said sports equipment 1 to the user. In particular this tying means 6 is fastened to the outer cover 4 and, more specifically, at the ends of the bearing coating 4a, as shown in Fig. 1. Said means is of the Velcro type or it consists of other similar means suitable to enable the sports equipment 1 to be fitted to body portions 10 belonging to users having different sizes.

The sports equipment 1, based on the type of physical activity it is suitable for, finally comprises known security and/or hooking means, not shown in the figure. In particular, if equipment 1 constitutes a trapeze for kitesurfing, it has both hooking means for the cables connecting the trapeze to the control bar and security means consisting of quick-release means suitable to enable the trapeze to be quickly released from said cables in case of danger.

Use of the sports equipment 1 described above as regards structure is the following.

Specifically, the described use refers to the particular preferred example of a trapeze for kitesurfing.

Initially the sports equipment 1 appears in an expanded configuration, i.e. the bladder is fully extended and has an almost maximum inner volume 2a.

The user places the sports equipment 1 close to his/her waist (Fig. 3a), i.e. the lower part of the bust and, thanks to the tying means 6, fastens equipment 1 to such a position.

In detail, in order to enable the resistant element 3a to correctly wrap the body portion 10, this positioning disposes bladder 2 close to the user's back and more specifically, bladder 2 wraps the whole back portion enclosed by the equipment and at least part of the hips, as shown in Fig. 3b.

When positioning has been completed, the user opens valve 5 obtaining passage of fluid between bladder 2 and the external environment. Alternatively, opening of valve 5 can take place at the beginning of the described use.

Then the air is evacuated from the inner volume 2a, for example by a pump, until the inner volume 2a of each bladder 2 is substantially under vacuum and the sports equipment 1 is therefore in a compressed configuration.

During this operation, in order to ensure correct positioning of the distinct particles 3, the user exerts pressure on the sports equipment 1 at bladder 2. This action enables particles 3 to be moved avoiding accumulation of them in the lower part of bladder 2 and ensuring that the resistant element 3a being formed will correctly wrap the body portion 10.

Once equipment 1 has reached the compressed configuration, the user stops connection for fluid passage closing valve 5, and the equipment 1 is ready for use.

At the end of use, equipment 1 is brought back to the expanded configuration, i.e. through opening of valve 5, the connection for fluid passage between bladder 2 and the external environment is activated again. This action causes return of air into the inner volume 2a and therefore loosening of the stiff body, i.e. the resistant element 3a. In fact, entry of air causes the bladder to expand so that it does not press any longer on the distinct particles 3 that are no longer maintained assembled.

In conclusion, the body portion 10 is set free and the equipment 1 can be removed.

The invention allows important advantages to be reached.

A first advantage is represented by the great practical use and the high freedom of movement ensured to the user.

Said advantage is due to the use of the distinct particles 3 for making the resistant element 3a.

In fact, during passage to the compressed configuration, as particles 3 can freely move, they adhere in an almost perfect manner to the body portion 10 ensuring an optimal support. In addition, due to this aspect, the sports equipment 1 can be fitted to users with different build and always ensure a high security.

This advantage of practical use and freedom of movement is further ensured by the reduced sizes of the sports equipment 1. In particular, this advantage is obtained by virtue of the reduced thickness of the resistant element 3a. Furthermore, the resistant element 3a, i.e. the stiff body thus made, is characterised by high support, strength and shock-absorbing capabilities. Another important advantage resides in the high sensation of comfort ensured by the sports equipment 1.

The invention is susceptible of variations all falling within the scope of the inventive idea. All of the details can be replaced by equivalent elements and the materials, shapes and sizes can be of any nature and magnitude.

## Claims

1. A sports equipment (1) adapted to counteract localised forces during performance of a physical activity, comprising at least one bladder (2) adapted to define a support volume (2a), **characterised in that** it comprises a plurality of distinct particles (3) disposed within said inner volume (2a) and at least one valve (5) suitable to create, upon command, a connection for fluid passage between said inner volume (2a) of said at least one chamber (2) and the environment outside said sports equipment (1) thus varying said inner volume (2a) so as to define an expanded configuration, in which said distinct particles (3) are freely movable, and a compressed configuration in which said distinct particles (3) become compacted and define a resistant element (3a).

2. A sports equipment (1) as claimed in claim 1, wherein, when said sports equipment (1) is in the compressed configuration, said at least one bladder (2) is substantially under vacuum.

3. A sports equipment (1) as claimed in one or more of the preceding claims, wherein said fluid of said connection for fluid passage is air.

4. A sports equipment (1) as claimed in one or more of the preceding claims, wherein said distinct particles (3) take up a portion of said inner volume (2a) included between 10% and 30% when said sports equipment (1) is in the expanded configuration.

5. A sports equipment (1) as claimed in one or more of the preceding claims, wherein said distinct particles (3) are made of a polymeric material.

6. A sports equipment (1) as claimed in one or more of the preceding claims, wherein said distinct particles (3) are made of a thermoplastic polymer.

7. A sports equipment (1) as claimed in one or more of the preceding claims, comprising an outer cover (4) defining at least one housing for said at least one bladder (2).

8. A sports equipment (1) as claimed in the preceding claim, wherein said at least one bladder (2) is fastened to said at least one housing.

9. A sports equipment (1) as claimed in one or more of claims 7-8, wherein said outer cover (4) comprises a bearing coating (4a) suitable to come directly into contact with a body portion (10), and a protection coating (4b) adapted to increase protection of said body portion, and wherein said bearing coating (4a) and protection coating (4b) are adapted to be mutually coupled defining said at least one housing (4a).

10. A sports equipment (1) as claimed in the preceding claim, wherein said bearing coating (4a) comprises tying means (6) adapted to enable said sports equipment (1) to be steadily fastened to said body portion (10).

11. A sports equipment (1) as claimed in the preceding claim, wherein said tying means (6) is of the Velcro type.

12. A sports equipment (1) as claimed in one or more of the preceding claims, constituting a trapeze for kitesurfing.
